# EUROPÄISCHE PATENTSCHRIFT

(11) **EP 1 502 815 B1**
(45) Veröffentlichungstag und Bekanntmachung des Hinweises auf die Patenterteilung: **16.04.2008**
(21) Anmeldenummer: 04102452.2
(22) Anmeldetag: 02.06.2004
(51) Int. Cl.: B60Q 1/48, G08G 1/16, B60R 1/00, H04N 7/18

(54) **Fahrhilfsvorrichtung**
Driving-aid-device
Dispositif d'aide à la conduite

(30) Priorität: 29.07.2003 DE 10334613
(43) Veröffentlichungstag der Anmeldung: 02.02.2005
(73) Patentinhaber: ROBERT BOSCH GMBH, 70442 Stuttgart (DE)
(72) Erfinder: Herrmann, Roland, 31139, Hildesheim (DE); Uhler, Werner, 76646, Bruchsal (DE); Egelhaaf, Jan, 71229, Leonberg (DE)

(56) Entgegenhaltungen:
- EP-A- 1 022 903
- EP-A- 1 170 172
- EP-A- 1 288 072
- DE-A- 19 925 584
- US-A1- 2001 030 688

## Beschreibung

### Stand der Technik

Die Erfindung geht aus von einer Fahrhilfsvorrichtung nach der Gattung des Hauptanspruchs. Aus der DE 199 25 584 A1 ist bereits ein Verfahren und eine Vorrichtung zur Fahrwegvisualisierung bekannt, bei der ein bei einem unveränderten Lenkwinkel zu erwartende Fahrweg eines Fahrzeugs in einer Anzeige dargestellt wird. Der Fahrer wird über den zu erwartenden Fahrweg informiert, so dass er den eingeschlagenen Lenkwinkel an ein Hindernis anpassen kann. Ferner wird vorgeschlagen, außer dem bei einem unveränderten Lenkwinkel zu erwartenden Fahrweg auch einen maximalen Bereich anzuzeigen, in dem ein möglicher Fahrweg liegen kann, der durch einen maximalen Einschlagswinkel der Lenkung nach links und rechts begrenzt ist. Ein Fahrer kann damit erkennen, ob er mit maximalem Einschlag noch um ein Hindernis herum fahren kann oder nicht.

Die gattungsgemässe EP 1 170 172 A2 zeigt ein Anzeigegerät für den Rückraum hinter einem Fahrzeug. In das Anzeigebild wird derjenige Fahrweg eingetragen, den das Fahrzeug bei einem ungeänderten Lenkwinkel wählt. Ferner wird ein weiterer Fahrweg in die Anzeige eingetragen, der den maximalen Ausschlag der Lenkung vermindert und einem festen, vorgegebenen Winkel entspricht. In einer weiteren Ausführungsform wird der aktuelle Fahrweg, der von dem momentan eingeschlagenen Lenkwinkel abhängig ist, in der Anzeige verbreitert angezeigt.

### Vorteile der Erfindung

Die erfindungsgemäße Fahrhilfsvorrichtung mit den Merkmalen des Hauptanspruchs hat demgegenüber den Vorteil, dass auch Hilfslinien und/oder Hilfsbänder angezeigt werden, die auf einen Teilausschlag der Lenkung bezogen sind. Das heißt die Hilfslinien und/oder Hilfsbänder kennzeichnen einen virtuellen Fahrschlauch, der zwar von dem Fahrzeug derzeit nicht eingenommen wird, aber bei einer entsprechenden Lenkwinkelkorrektur eingenommen werden könnte. Hierbei ist es nicht erforderlich, dass der Fahrer einen Vollausschlag der Lenkung vornimmt. Ein derartiger Vollausschlag der Lenkung ist für den Fahrer insbesondere bei einer nicht vorhandenen Servolenkung mühsam und muss gegebenenfalls im Stand durchgeführt werden, wodurch sich der Reifenabrieb erhöht. Durch lediglich auf einen Teilausschlag der Lenkung bezogene Hilfslinien wird es einem Fahrer ermöglicht, abzuschätzen, ob er mit dem entsprechenden Teilausschlag, der in der Anzeige mittels der Hilfslinie und/oder den Hilfsbändern dargestellt wird, bereits um ein Hindernis herumfahren kann. Hierdurch wird ein Manövrieren mit einer entsprechenden Kamera- und Abbildungsunterstützung vereinfacht.

Vorteilhaft werden erfindungsgemäß die Hilfslinien und/oder Hilfsbänder in Bezug zu Fahrkreissegmenten dargestellt, die nur mit einem Vollausschlag erreichbar sind.

Durch die in den Unteransprüchen aufgeführten Maßnahmen sind vorteilhafte Weiterbildungen und Verbesserungen der im Hauptanspruch angegebenen Fahrhilfsvorrichtung möglich. Besonders vorteilhaft ist, eine Darstellungsposition der Hilfslinien und/oder der Hilfsbänder von einem aktuell eingeschlagenen Lenkwinkel abhängig zu gestalten. Hierzu kann gegebenenfalls vorgesehen sein, einen maximalen Abstand zwischen dem aktuell eingeschlagenen Lenkwinkel und einem für ein Befahren des durch die Hilfslinien gekennzeichneten virtuellen Fahrschlauchs erforderlichen Lenkwinkel zu bestimmen. Hierdurch wird der von dem Fahrer vorzunehmenden Lenkaufwand auf ein vorgebbares Maß, z.B. eine vollständige Lenkraddrehung, begrenzt.

Ferner ist es vorteilhaft, einen virtuellen Fahrschlauch derart zu kennzeichnen, dass er in Bezug auf den Geradeauslauf des Fahrzeugs einem Einschlag um den schlagen hat, gegenlenken kann. Um eine Nachführung des aktuell eingestellten Lenkwinkels zu erleichtern, wird dabei bevorzugt zu Beginn eines Gegenlenkens die Anzeige des virtuellen Fahrschlauchs in der Anzeige unverändert festgehalten, so dass ein Benutzer den aktuellen Fahrschlauch, der eine Fahrstrecke des Fahrzeugs jeweils bei ungeändertem Lenkwinkel in der Anzeige kennzeichnet, durch ein Drehen des Lenkrads mit dem angezeigten virtuellen Fahrschlauch in Deckung bringen und diesem dann folgen kann.

Ferner ist es vorteilhaft, anstelle der Hilfslinien Bänder in der Anzeige darzustellen, die es einem Fahrer ermöglichen, abzuschätzen, wie stark zum Erreichen eines Fahrziels eingeschlagen werden muss. Der Fahrer vergleicht hierzu nicht lediglich die Position von Linien mit den Positionen möglicher Hindernisse in der Anzeige, sondern er kann einen gesamten Bereich, der breiter als eine Linie ist, mit den Hindernispositionen vergleichen. Hierbei ist es vorteilhaft, die Bänder farblich abgestuft darzustellen, wobei in einer bevorzugten Ausführungsform aus der Farbe des Bereiches eines Bandes erkennbar ist, wie stark das Lenkrad eingeschlagen werden muss. Es ist ferner vorteilhaft, die Breite der Hilfslinien und/oder Hilfsbänder in Abhängigkeit von der Fahrzeuggeschwindigkeit, dem Lenkwinkel und/oder der Lenkwinkelgeschwindigkeit zu wählen. Mit zunehmender Fahrzeuggeschwindigkeit, zunehmender Lenkgeschwindigkeit und auch je weiter das Lenkrad eingeschlagen ist, ist von dem Fahrer eine genauere Steuerung der Lenkung erforderlich. Mitunter wird es dem Fahrer daher nicht gelingen, die vorgeschlagene Hilfslinie bei der Fahrt genau zu erreichen. Daher wird bei steigender Fahrzeuggeschwindigkeit, steigendem Lenkwinkel und auch einer steigenden Lenkgeschwindigkeit die Breite der angezeigten Hilfslinien und/oder Bänder vergrößert, z.B. verdoppelt, wenn eine Fahrzeuggeschwindigkeit von 20 km/h eine Lenkwinkelgeschwindigkeit von mehr als einer Viertelumdrehung pro Sekunde oder ein Lenkradeinschlag von mehr als 45 Grad übertroffen wird.

Ferner ist vorteilhaft, die erfindungsgemäße Fahrhilfsvorrichtung mit einer Einparkvorrichtung zu verbinden, die dem Einparken in eine Parklücke dient und hierzu insbesondere Abstandssensoren zur Vermessung der Parklückengröße und/oder zur Warnung von Hindernissen aufweist.

Ebenfalls ist es vorteilhaft, in der Anzeige eine Linie darzustellen, anhand der ein Fahrer erkennen kann, wann er mit dem Einlenken in die Parklücke beginnen muss. Der Fahrer kann nun anhand der Anzeige überprüfen, ob er mit einem entsprechenden Einschlagen des Lenkrads in die Parklücke hineinfahren kann und wann er gegebenenfalls mit einem Gegenlenkvorgang beginnen muss.

Es ist ferner vorteilhaft, zur Erleichterung der Orientierung in der Anzeige Abstandsmarkierungen darzustellen, die einem Benutzer angeben, wie weit Bereiche des dargestellten Fahrraums und insbesondere Hindernisse in diesem Fahrraum vom Fahrzeug entfernt sind.

### Zeichnung

Ausführungsbeispiele der Erfindung sind in der Zeichnung dargestellt und in der nachfolgenden Beschreibung näher erläutert. Es zeigen
Figur 1 eine Ansicht eines Fahrzeugs mit einer erfindungsgemäßen Fahrhilfsvorrichtung,
Figur 2 eine schematische Darstellung einer erfindungsgemäßen Fahrhilfsvorrichtung,
Figuren 3 bis 5 verschiedene Ausführungsbeispiele für eine Anzeige einer erfindungsgemäßen Fahrhilfsvorrichtung.

### Beschreibung des Ausführungsbeispiels

Die vorliegende erfindungsgemäße Fahrhilfsvorrichtung kann in beliebigen Fahrzeugen verwendet werden. Insbesondere ist ihre Verwendung vorteilhaft in Kraftfahrzeugen, bei denen ein Fahrer sich bei Einparkvorgängen orientieren muss, ohne mögliche Hindernisse in der näheren Fahrzeugumgebung selbst erfassen zu können. Daher ist die vorliegende Erfindung im Folgenden anhand einer Fahrhilfsvorrichtung in einem Kraftfahrzeug erläutert.

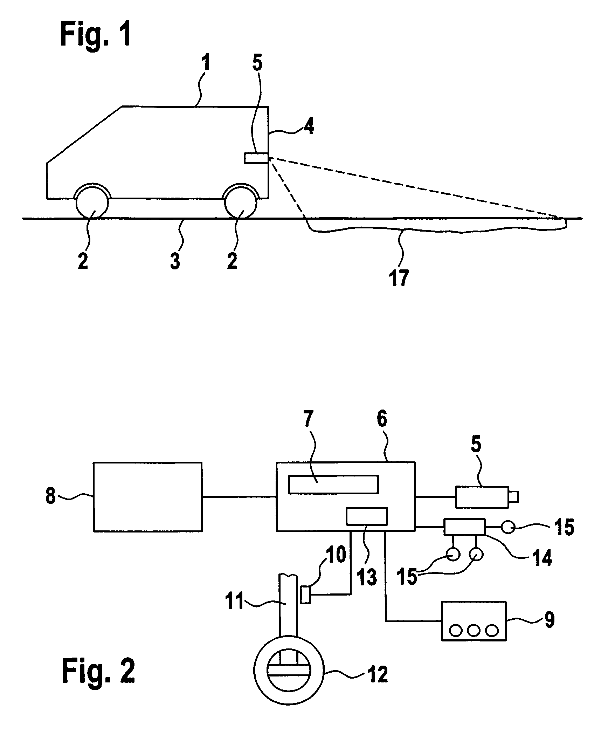

In der Figur 1 ist ein Kraftfahrzeug 1 dargestellt, das sich mit seinen Rädern 2 auf einer Fahrbahn 3 bewegt. An einer Rückseite 4 des Fahrzeugs 1 ist eine Kamera 5 angeordnet, die auf der Fahrbahn 3 hinter dem Fahrzeug 1 gerichtet ist. Die Kamera 5 überwacht damit einen Fahrraum des Fahrzeugs bei einem Rückfahrvorgang. Die Kamera 5 ist in der Mitte des Fahrzeugs angeordnet. Sie kann jedoch auch am Fahrzeugdach angeordnet sein. Die Anordnung der Kamera 5 ist nicht auf die Rückseite des Fahrzeugs beschränkt, sondern sie kann an einer beliebigen anderen Fahrzeugseite angeordnet sein. In einer bevorzugten Ausführungsform sind für verschiedene Fahrzeugseiten jeweils eigene Kameras vorgesehen. Die Kamera 5 ist vorzugsweise als eine Weitwinkelkamera ausgeführt, um möglichst einen großen Bereich eines Fahrraums 17 auf der Fahrbahn 3 und darauf befindlicher Hindernisse erfassen zu können. Die übrigen Komponenten der erfindungsgemäßen Fahrhilfsvorrichtung sind in der Figur 1 nicht dargestellt.

In einer weiteren Ausführungsform ist eine Einparkvorrichtung 14 mit einer Auswerteeinheit zur Erfassung von Abständen des Fahrzeugs zu Hindernissen an die Zentraleinheit 6 angeschlossen. Die Einparkvorrichtung 14 ist mit Sensoren 15 verbunden, die bevorzugt an verschiedenen Stellen der Fahrzeugaußenseite angeordnet sind und die die Abstände des Fahrzeugs 1 zu Hindernissen in der Fahrzeugumgebung bestimmen.

Die Figur 2 zeigt einen schematischen Aufbau einer erfindungsgemäßen Fahrhilfsvorrichtung. Die Kamera 5 ist, wie in der Figur 1 erläutert, an dem Fahrzeug 1 angeordnet. Ein Kamerasignal des erfassten Fahrraums des Fahrzeugs 1 wird an eine Zentraleinheit 6 übertragen, die das Kamerasignal zur Ausgabe an eine Anzeige 8 übermittelt. Die Anzeige 8 ist bevorzugt in einer für den Fahrer gut sichtbaren Position angeordnet, z.B. in der Mittelkonsole, im Kombiinstrument oder - insbesondere für die Verwendung bei Rückwärtsfahrten- an einem Innenspiegel oder an der Rückscheibe. In einer weiteren Ausführungsform ist auch die Einblendung in einem sogenannten Head-Up-Display möglich, bei dem auf die Windschutzscheibe des Fahrzeugs ein entsprechendes Bild projiziert wird. Die Anzeige 8 ist in dem gezeigten Ausführungsbeispiel als eine Flüssigkristallanzeige ausgeführt.

Die Zentraleinheit 6 ist über eine Bedieneinheit 9 steuerbar. Ferner ist die Zentraleinheit 6, gegebenenfalls auch über einen nicht gezeigten Datenbus, mit einem Lenkwinkelsensor 10 verbunden, der von einer Lenkachse 11, die über ein Lenkrad 12 bedient wird, den aktuell eingeschlagenen Lenkwinkel abfragt und an die Zentraleinheit 6 übermittelt. Die Recheneinheit 7 berechnet nun in Abhängigkeit von dem eingeschlagenen Lenkwinkel einen in der Anzeige 8 darzustellenden Fahrschlauch des Fahrzeugs. Unter dem Fahrschlauch des Fahrzeugs ist hierbei derjenige Weg auf der Fahrbahn 3 zu verstehen, der von dem Fahrzeug eingenommen wird, wenn der Lenkwinkel unverändert beibehalten wird und das Fahrzeug in die entsprechende Richtung fährt. Der dargestellte Fahrschlauch wird dem von der Kamera 5 empfangenen Bild überlagert, indem vorzugsweise eine linke und rechte Begrenzung des Fahrschlauchs in das Bild mit eingeblendet und in der Anzeige 8 ausgegeben wird.

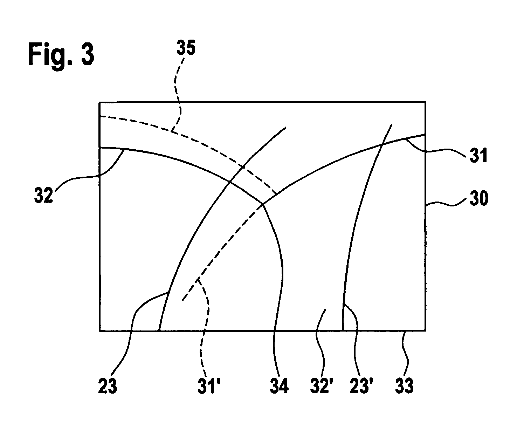

Die Recheneinheit 7 berechnet ferner ergänzende Hilfslinien, die auf gleiche Weise in das in der Anzeige 8 dargestellte und von der Kamera 5 aufgenommene Bild eingeblendet werden. Der Fahrer kann die angezeigten Linien für die Ausrichtung an markanten Objekten in dem von der Umgebung aufgenommenen Bild verwenden. Z.B. kann er sich an Parkbuchtmarkierungen oder Bordsteinkanten orientieren. Hierzu setzt er das Fahrzeug solange zurück, bis das markante Objekt im Bild eine der Hilfslinien tangiert. Dann stoppt der Fahrer das Fahrzeug. Er dreht das Lenkrad so, dass der durch die Hilfslinien vorgegebene Einschlagswinkel des Fahrzeugs erreicht wird und fährt anschließend weiter rückwärts, z.B. bis das Fahrzeug parallel zu der Bordsteinkante oder der Parkbuchtmarkierung ausgerichtet ist. Der Fahrer kann nun so gegenlenken, dass das Fahrzeug entlang der Markierung, also z.B. der Bordsteinkante oder der Parkbuchtmarkierung weitergeführt wird. Ausführungsbeispiele für entsprechende Darstellungen von Hilfslinien und/oder Hilfsbänder in der Anzeige 8 sind in den Figuren 3 bis 5 dargestellt und im Folgenden erläutert.

In der Figur 3 ist ein erstes Ausführungsbeispiel für eine erste Anzeigendarstellung 30 in der Anzeige 8 dargestellt. In der ersten Anzeigendarstellung 30 sind in das von der Kamera 5 erfasste Bild eingeblendete Linien und Hilfslinien eingetragen. Die Kamera 5 ist schräg auf die Fahrbahn 3 gerichtet. Daher wird bei der Berechnung der Linien berücksichtigt, dass Bereiche in der Nähe eines oberen Bildrandes weiter von dem Fahrzeug entfernt sind als Bereiche in der Nähe eines unteren Bildrandes. Es erfolgt somit eine perspektivische Einblendung der Linien bzw. Hilfslinien. Ferner ist eine Darstellung eines aktuellen Fahrschlauchs 23, 23' in der zweiten Anzeigendarstellung 30 eingetragen. Der aktuelle Fahrschlauch ist derjenige Fahrschlauch des Fahrzeugs, der von dem Fahrzeug bei einem ungeänderten Lenkwinkel gefahren wird. Ergänzend sind eine erste Begrenzungslinie 31 und eine zweite Begrenzungslinie 32 eingetragen, die einen maximalen Fahrbereich kennzeichnen. Der maximale Fahrbereich ist durch einen maximalen Einschlag der Lenkung des Fahrzeugs nach links bzw. nach rechts vorgegeben. So kann das Fahrzeug bei einem maximalen Einschlag nach rechts nicht stärker nach rechts fahren, als es durch die erste Begrenzungslinie 31 gekennzeichnet ist. Ebenfalls kann das Fahrzeug nicht weiter nach links fahren, als es durch die zweite Begrenzungslinie 32 gekennzeichnet ist. Die beiden Begrenzungslinien 31, 32 treffen sich in einem Punkt 34, wobei für den Nahbereich keine weitere Darstellung der Linien angezeigt wird. In der Figur 3 ist zur Verdeutlichung der Funktion der entsprechenden Begrenzungslinien 31, 32 eine gestrichelte Linie jeweils bis zu einem unteren Bildrand 33 der ersten Anzeigendarstellung 30 fortgeführt.

Erfindungsgemäß wird zusätzlich zu dem maximalen Bereich mittels der Begrenzungslinien 31, 32 eine Hilfslinie 35 in die erste Anzeigendarstellung 30 eingetragen, die es einem Fahrer ermöglicht zu erkennen, ob bei einer Regelung einer rechten Begrenzung 23' des aktuellen Fahrschlauchs auf die Hilfslinie 35 durch einen entsprechenden Einschlag des Lenkrads nach links bereits ein in der ersten Anzeigendarstellung 30 gegebenenfalls erkennbares Hindernis umfahren werden könnte. In diesem Fall ist es nicht erforderlich, zunächst eine Position anzufahren, bei der nur noch ein Vollausschlag möglich ist. Vielmehr kann der Fahrer schon im Vorfeld entscheiden ob vielleicht auch ein geringerer Einschlagswinkel zum Umfahren des erkennbaren Hindernisses ausreicht. In einer bevorzugten Ausführungsform ist die Hilfslinie 35 entsprechend der Hilfslinie 25' in der Figur 3 gewählt und entspricht damit einem Einschlagswinkel des aktuellen Fahrschlauchs in die entgegengesetzte Richtung jeweils in Bezug auf einen Geradeauslauf des Fahrzeugs. Bei dem hier dargestellten Ausführungsbeispiel ist die Hilfslinie 35 nicht bis zu einem unteren Bildrand 33 fortgeführt, sondern endet an der ersten Begrenzungslinie 31, die einen maximalen Rechtseinschlag kennzeichnet.

In einer weiteren Ausführungsform ist es auch möglich die Position der Hilfslinie 35 über die Bedieneinheit 9, z. B. über einen Drehregler, der Fahrhilfsvorrichtung vorzugeben. Ein Fahrer kann dann einen von ihm gewünschten Einschlagswinkel vorgeben, zu dem dann ein entsprechender virtueller Fahrschlauch in der Anzeige ausgegeben wird.

Will ein Fahrer ausgehend von der Darstellung in der Figur 3 einen Einschlagswinkel einstellen, der stärker nach links verläuft, als es die Hilfslinie 35 vorgibt, kann sich der Fahrer zumindest an einem Punkt innerhalb des Bereichs zwischen der Hilfslinie 35 und der zweiten Begrenzungslinie 32 zur Begrenzung eines maximalen Einschlags nach links orientieren.

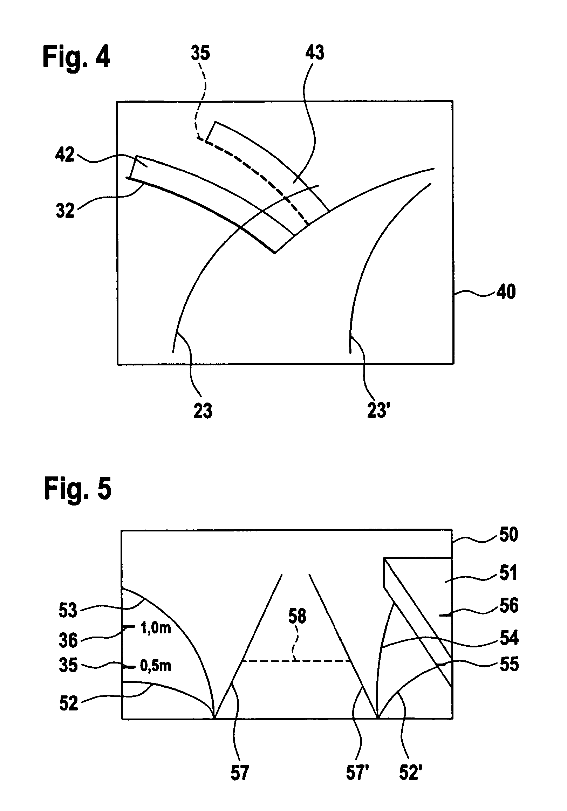

In der Figur 4 ist in einer zweiten Anzeigendarstellung 40 eine weitere Ausführungsform der Anzeige gemäß der Figur 4 dargestellt. In der zweiten Anzeigendarstellung 40 sind neben dem aktuellen Fahrschlauch 23, 23' und der ersten Begrenzungslinie 31 und der zweiten Begrenzungslinie 32 zur Anzeige eines maximalen Fahrwegs anstelle der Linien 32 und 35 zwei Bänder 42 und 43 dargestellt, die möglichst transparent über das von der Kamera 5 erfasste Bild gelegt werden. Das erste Band 42 schließt sich nach hinten an die zweite Begrenzungslinie 32 an. Das zweite Band 43 schließt sich nach hinten an die Hilfslinie 35 an. Die Einfärbung der Bänder kann variabel gestaltet werden, und zwar bevorzugt so, dass anhand der Einfärbung der jeweiligen Bänder erkennbar ist, wie stark das Lenkrad eingeschlagen werden muss. Bevorzugt wird ein Fahrer nunmehr einen Lenkwinkel so einstellen, dass sich der aktuelle Fahrschlauch 23, 23' nur in dem zweiten Band 43 bewegt, um möglichst einen Vollausschlag vermeiden zu können.

In einer bevorzugten Ausführungsform kann die Breite der Bänder 42, 43 in Abhängigkeit von der Fahrzeuggeschwindigkeit oder der Lenkwinkelgeschwindigkeit des Fahrers gewählt werden. Fährt das Fahrzeug also z.B. schneller als eine vorgegebene Geschwindigkeit, vergrößert sich die Breite der Bänder 42, 43. Eine entsprechende Vergrößerung der Bänder kann auch dann erfolgen, wenn der aktuelle Lenkwinkel um mehr als 45° von einem Geradeauslauf des Fahrzeugs abweicht. Eine farbliche Veränderung der Bänder kann anstelle einer festgelegten Grenze und Bereichszuordnung, wie es in Figur 5 gezeigt ist, auch kontinuierlich erfolgen. Eine Banddarstellung bietet einem Fahrer eine Unterstützung in der Weise, dass er mit einem Einschlagen dann beginnen kann, wenn eine äußere Bandbegrenzung den gewählten Orientierungspunkt erreicht. Sollte sich sein Einschlagen verzögern, so hat er die Sicherheit, dass der Einschlagswinkel noch genug Reserve aufweist, um das Hindernis, zu dessen Beginn er mit den Einschlagen begonnen hat, noch sicher umfahren kann. Durch ein rechtzeitiges Einschlagen erhält sich der Fahrer seine Manövrierfähigkeit, so dass er zu jedem Zeitpunkt seiner Fahrt stets in zwei Richtungen ausweichen kann. Bei einem Vollausschlag ist dagegen lediglich nur noch ein Ausweichen in eine Richtung möglich.

In der Figur 5 ist in einer dritten Anzeigendarstellung 50 der Anzeige 8 ein aktueller Fahrschlauch 57, 57' dargestellt. In dem hier gezeigten Ausführungsbeispiel ist ein Geradeauslauf eingestellt. Rechts von dem aktuellen Fahrschlauch 57, 57' ist ein Hindernis 51 in der dritten Anzeigendarstellung 50 dargestellt. Das Hindernis 51 erhebt sich über den sichtbaren Fahrbahnboden. Neben dem aktuellen Fahrschlauch 57, 57' sind Fahrschlauchbegrenzungen 52, 52' eingetragen, die eine linke seitliche Begrenzung für ein maximales Einschlagen nach links kennzeichnen (Bezugszeichen 52) bzw. die einen rechten Rand eines Fahrschlauchs bei einem maximalen Einschlagen nach rechts kennzeichnen (Bezugszeichen 52'). Zudem ist eine Fahrschlauchbegrenzung 53 eingetragen, die ein Einschlagen nach links mit einer halben Lenkradumdrehung kennzeichnet. Ebenfalls ist eine rechte Begrenzung 54 eines Fahrschlauchs eingetragen, der bei einem Einschlagen nach rechts um eine halbe Lenkradumdrehung ausgehend von dem Geradeauslauf eingenommen wird. Ein Fahrer kann sich nun anhand der dargestellten Markierungen in Bezug auf das Hindernis 51 orientieren und gegebenenfalls ein Einschlagen nach rechts starten, sobald er an dem Hindernis 51 vorbeigefahren ist. Ergänzend sind Abstandsmarkierungen 55, 56 an der linken sowie an der rechten Seite der Anzeige eingetragen. Die erste Abstandsmarkierung 55 ist mit der Aufschrift "0,5 m" und die zweite Abstandsmarkierung 56 mit der Aufschrift "1,0 m" versehen. Die Abstandsmarkierungen geben an, wie weit ein auf der Höhe der Abstandsmarkierung auf dem Fahrboden befindlicher Punkt von dem Fahrzeug entfernt ist. Damit kann ein Fahrer insbesondere die Entfernung zu in der Anzeige dargestellten Hindernissen abschätzen.

Die Abstandsmarkierungen 55, 56 können auch in die Darstellungen 30, 40 gemäß der anderen Figuren integriert werden. Ebenso ist auch eine geeignete Position verschiedener Hilfslinien, wie sie in den verschiedenen Figuren 3 bis 5 gezeigt sind, möglich. So kann z.B. die Hilfslinie 35 überlagert den Bändern 42, 43 angezeigt werden. Zusätzlich zu den Begrenzungslinien 31, 32 in den Figuren 3 und 4 können die Fahrschlauchbegrenzungen 52, 52' entsprechend dargestellt werden. Ferner ist eine gestrichene Linie 58 dargestellt, mit deren Hilfe der Fahrer die Startposition für ein Einlenken zum Einparken in eine Parklücke bestimmen kann. Erreicht ein Fahrer mit dieser Linie die Position des hinteren Fahrzeugs der Parklücke, so kann er mit dem Einlenken beginnen.

## Patentansprüche

1. Fahrhilfsvorrichtung für ein Fahrzeug (1) mit einer Kamera (5) zur Überwachung eines Fahrraums (7), mit einem Lenkwinkelsensor (10) zur Erfassung der eingeschlagenen Lenkrichtung des Fahrzeugs (1) und mit einer Anzeige (8) zur Darstellung des Fahrraums (7) und zur Darstellung eines von dem eingeschlagenen Lenkwinkel abhängigen Fahrschlauchs (23, 23', 57, 57') des Fahrzeugs (1) in dem Fahrraum (7), wobei weitere, auf einen Teilausschlag der Lenkung bezogene Hilfslinien und/oder Hilfsbänder (25, 35, 42, 43, 53, 54) zur seitlichen Begrenzung mindestens einen virtuellen Fahrschlauchs in der Anzeige (8) angezeigt werden, **dadurch gekennzeichnet, dass** die Hilfslinien und/oder Hilfsbänder (25, 35, 42, 43, 53, 54) in Bezug zu Begrenzungslinien (31, 32, 52) dargestellt sind, die einen maximalen Fahrbereich kennzeichnen, der durch einen maximalen Einschlag der Lenkung nach links bzw. rechts vorgegeben ist.

2. Fahrhilfsvorrichtung nach Anspruch 1, **dadurch gekennzeichnet, dass** eine Darstellungsposition der Hilfslinien und/oder Hilfsbänder (25, 35, 42, 43, 53, 54) von einem eingeschlagenen Lenkwinkel abhängt.

3. Fahrhilfsvorrichtung nach Anspruch 2, **dadurch gekennzeichnet, dass** die Hilfslinien und/oder Hilfsbänder einen virtuellen Fahrschlauch (25, 25') kennzeichnen, der gegenüber einem Geradeauslauf des Fahrzeugs einen Winkel aufweist, der mit umgekehrtem Vorzeichen dem Winkel des tatsächlichen Lenkeinschlags gegenüber dem Geradeauslauf des Fahrzeugs entspricht.

4. Fahrhilfsvorrichtung nach Anspruch 3, **dadurch gekennzeichnet, dass** mit Beginn eines Gegenlenkens die Anzeige des virtuellen Fahrschlauchs (25, 25') beibehalten wird.

5. Fahrhilfsvorrichtung nach einem der vorherigen Ansprüche, **dadurch gekennzeichnet, dass** die Hilfslinien und/oder Hilfsbänder einen virtuellen Fahrschlauch kennzeichnen, der zwar von dem Fahrzeug derzeit nicht eingenommen wird, aber bei einer entsprechenden Lenkwinkelkorrektur eingenommen werden könnte.

6. Fahrhilfsvorrichtung nach einem der vorherigen Ansprüche, **dadurch gekennzeichnet, dass** die Hilfslinien und/oder Hilfsbänder (42, 43) in Abhängigkeit von ihrer Position farblich abgestuft angezeigt werden.

7. Fahrhilfsvorrichtung nach einem der vorherigen Ansprüche, **dadurch gekennzeichnet, dass** eine Breite der Hilfslinien und/oder Hilfsbänder (42, 43) in Abhängigkeit von der Fahrzeuggeschwindigkeit, dem Lenkwinkel und/oder der Lenkgeschwindigkeit gewählt wird.

8. Fahrhilfsvorrichtung nach einem der vorherigen Ansprüche, **gekennzeichnet, durch** eine Einparkvorrichtung (14) zur Bestimmung einer Position zum Einlenken in eine Parklücke.

9. Fahrhilfsvorrichtung nach Anspruch 8, **dadurch gekennzeichnet, dass** einem Startposition (58) für das Einlenken in der Anzeige dargestellt wird.

10. Fahrhilfsvorrichtung nach einem der vorherigen Ansprüche, **dadurch gekennzeichnet, dass** in der Anzeige (8) auf den Fahrraum bezogene Abstandsmarkierungen (55, 56) dargestellt sind.

## Claims

1. Driving aid for a vehicle (1) having a camera (5) for monitoring a driving area (7), having a steering angle sensor (10) for sensing the steering direction adopted by the vehicle (1), and having a display (8) for displaying the driving area (7) and for displaying a driving tube (23, 23', 57, 57'), dependent on the adopted steering angle, of the vehicle (1) in the driving space (7), wherein further assistance lines and/or assistance bands (25, 35, 42, 43, 53, 54) which are referred to a partial deflection of the steering system are displayed in order to bound laterally at least one virtual driving tube on the display (8), **characterized in that** the assistance lines and/or assistance bands (25, 35, 42, 43, 53, 54) are displayed with respect to boundary lines (31, 32, 52) which characterize a maximum driving range and which is predefined by a maximum lock of the steering to the left or to the right.

2. Driving aid according to Claim 1, **characterized in that** a displayed position of the assistance lines and/or assistance bands (25, 35, 42, 43, 53, 54) depends on an adopted steering angle.

3. Driving aid according to Claim 2, **characterized in that** the assistance lines and/or assistance bands characterize a virtual driving tube (25, 25') which, with respect to straight-ahead travel of the vehicle, has an angle which corresponds, with a reversed sign, to the angle of the actual steering lock with respect to the straight-ahead travel of the vehicle.

4. Driving aid according to Claim 3, **characterized in that**, when countersteering starts, the display of the virtual driving tube (25, 25') is continued.

5. Driving aid according to one of the preceding claims, **characterized in that** the assistance lines and/or assistance bands characterize a virtual driving tube which, although it is not currently adopted by the vehicle, could be adopted given a corresponding steering angle correction.

6. Driving aid according to one of the preceding claims, **characterized in that** the assistance lines and/or assistance bands (42, 43) are displayed with colour gradation as a function of their position.

7. Driving aid according to one of the preceding claims, **characterized in that** the width of the assistance lines and/or assistance bands (42, 43) is selected as a function of the velocity of the vehicle, the steering angle and/or the steering speed.

8. Driving aid according to one of the preceding claims, **characterized by** a parking device (14) for determining a position for steering into a parking space.

9. Driving aid according to Claim 8, **characterized in that** a starting position (58) for steering is displayed on the display.

10. Driving aid according to one of the preceding claims, **characterized in that** distance markings (55, 56) which are related to the driving area are displayed on the display (8).

## Revendications

1. Dispositif d'assistance à la conduite pour un véhicule (1) comportant une caméra (5) pour surveiller l'espace de conduite (7), un capteur d'angle de braquage (10) pour saisir l'angle de braquage pris par le véhicule (1) et un afficheur (8) pour représenter l'espace de conduite (7) et un tube de conduite (23, 23', 57, 57') dépendant de l'angle de braquage pris par le véhicule (1) dans l'espace de conduite (7),
d'autres lignes auxiliaires et/ou bandes auxiliaires (25, 35, 42, 43, 53, 54) rapportées au débattement partiel de la direction étant affichées pour délimiter latéralement au moins un couloir de conduite virtuel sur l'afficheur (8),
**caractérisé en ce que**
les lignes auxiliaires et/ou les bandes auxiliaires (25, 35, 42, 43, 53, 54) sont représentées par rapport aux lignes de délimitation (31, 32, 52) caractérisant une plage de conduite maximale prédéfinie par le braquage maximum de la direction vers la gauche ou vers la droite.

2. Dispositif d'assistance à la conduite selon la revendication 1,
**caractérisé en ce que**
la position de représentation des lignes auxiliaires et/ou des bandes auxiliaires (25, 35, 42, 43, 53, 54) dépend de l'angle de braquage pris.

3. Dispositif d'assistance à la conduite selon la revendication 2,
**caractérisé en ce que**
les lignes auxiliaires et/ou les bandes auxiliaires caractérisent un couloir de conduite virtuel (25, 25') qui présente un angle par rapport à la direction droite du véhicule correspondant à l'inverse du signe algébrique de l'angle de braquage effectif par rapport à la ligne droite du véhicule.

4. Dispositif d'assistance à la conduite selon la revendication 3,
**caractérisé en ce qu'**
avec le début du contre-braquage on conserve l'affichage du couloir de conduite virtuel (25, 25').

5. Dispositif d'assistance à la conduite selon l'une des revendications précédentes,
**caractérisé en ce que**
les lignes auxiliaires et/ou les bandes auxiliaires caractérisent un couloir de conduite virtuel qui n'est certes pas pris par le véhicule à ce moment mais qui pourrait être pris avec une correction d'angle de braquage correspondante.

6. Dispositif d'assistance à la conduite selon l'une des revendications précédentes,
**caractérisé en ce que**
les lignes auxiliaires et/ou les bandes auxiliaires (42, 43) sont affichées de manière dégradée en couleur en fonction de leur position.

7. Dispositif d'assistance à la conduite selon l'une quelconque des revendications précédentes,
**caractérisé en ce que**
la largeur des lignes auxiliaires et/ ou des bandes auxiliaires (42, 43) est choisie en fonction de la vitesse du véhicule, de l'angle de braquage et/ou de la vitesse de braquage.

8. Dispositif d'assistance à la conduite selon l'une quelconque des revendications précédentes,
**caractérisé par**
un dispositif de manoeuvre de rangement (14) pour déterminer une position pour braquer dans un emplacement de stationnement.

9. Dispositif d'assistance à la conduite selon la revendication 8,
**caractérisé en ce qu'**
on affiche une position de départ (58) pour le braquage sur l'afficheur.

10. Dispositif d'assistance à la conduite selon l'une quelconque des revendications précédentes,
**caractérisé en ce que**
des repères de distance (55, 56) rapportés à l'espace de conduite sont présentés sur l'afficheur (8).
